# EUROPÄISCHE PATENTANMELDUNG

(11) **EP 2 523 300 A1**
(43) Veröffentlichungstag der Anmeldung: **14.11.2012**
(21) Anmeldenummer: 11165664.1
(22) Anmeldetag: 11.05.2011
(51) Int. Cl.: H02J 7/00

(54) **Ladestation zum Aufladen von Elektrofahrzeugen**

(71) Anmelder: Schroff GmbH, 75334 Straubenhardt (DE)
(72) Erfinder: Welle, Dieter, 76597 Loffenau (DE); Günther, Hans-Ullrich, 76327 Pfinztal (DE)
(74) Vertreter: Durm & Partner

(57) **Zusammenfassung**

Eine Ladestation zum Aufladen von Elektrofahrzeugen hat einen Ladeschacht (2), in dem wenigstens eine Steckdose (18) zum Anschließen eines Ladekabels (4) angeordnet sind. Eine bewegliche Ladeklappe (3) deckt den Ladeschacht (2) so ab, dass das Ladekabel (4) nur bei geöffneter Ladeklappe (3) angesteckt oder abgezogen werden kann. Die geschlossene Ladeklappe (3) ist verriegelt. In geöffneter Stellung wird die Ladeklappe (3) selbsttätig mittels eines Elektromagneten (16) fixiert, so dass sie nicht mit der Hand offen gehalten werden muss. Nach dem Anstecken des Ladekabels (4) wird die Arretierung automatisch gelöst und die Ladeklappe (3) geschlossen. Auch nach dem Abziehen des Ladekabels (4) schließt sich die Ladeklappe (3) automatisch nach einer vorgegebenen Wartezeit. Durch die Fixierung der Ladeklappe (3) in Offen-Stellung hat der Benutzer beide Hände frei, um das Ladekabel (4) anzuschließen. Trotzdem ist gewährleistet, dass die Ladeklappe (3) nach dem Anstecken oder Abziehen des Ladekabels (4) geschlossen wird.

## Beschreibung

Die Erfindung betrifft eine Ladestation zum Aufladen der Batterie eines Elektrofahrzeugs mittels eines zum Fahrzeug gehörenden Ladekabels.

Für die erwartungsgemäß schnell wachsende Zahl von elektrisch angetriebenen Fahrzeugen ist der Aufbau einer flächendeckenden Stromversorgung notwendig. Ausgehend von der Tatsache, dass Autos vor allem im urbanen Umfeld häufiger parken als umherfahren, sollen Ladestationen im öffentlichen oder halböffentlichen Raum aufgestellt werden. Diese Ladestationen können auch zugleich Parkscheinautomaten sein, so dass insbesondere Städte und Kommunen die Möglichkeit haben, die Parkraumbewirtschaftung mit dem Verkauf von Strom zum Aufladen des geparkten Autos zu verbinden.

Das Aufladen an einer Ladestation erfolgt mittels eines Ladekabels, das in der Regel zum Fahrzeug gehört, und genormten Steckdosen an der Ladestation. Um Missbrauch, Stromdiebstahl und Vandalismus auszuschließen, muss die Ladestation so ausgebildet sein, dass nur der berechtigte Nutzer sein Kabel anstecken und später wieder abnehmen kann; in unbenutztem Zustand sollte die Ladestation gut geschlossen sein.

Bekannt sind Ladestationen für Elektrofahrzeuge mit einem Ladeschacht, in dem eine oder mehrere Steckdosen zum Anschließen eines Ladekabels angeordnet sind, sowie mit einer beweglichen Ladeklappe, die bei geöffneter Stellung das Anstecken oder Abziehen des Ladekabels erlaubt und bei geschlossener Stellung den Ladeschacht zumindest so weit abdeckt, dass das gesteckte Ladekabel nicht abgezogen werden kann.

US 7,804,274 B2 beschreibt eine Ladestation mit einer horizontal gelagerten Ladeklappe mit drei Stellungen: Offen, geschlossen und halbgeschlossene Ladestellung, in der das angesteckte Ladekabel durch einen Spalt zwischen Klappe und Gehäuse hindurchgeführt ist. Es sind zwei unabhängige Sperren vorgesehen. Die erste Sperre verriegelt die geschlossene Klappe, die zweite Sperre sorgt für die Verriegelung in Ladestellung. Auf diese Weise ist die Ladestation sowohl in unbenutztem Zustand wie auch während des Ladens mit gestecktem Ladekabel gegen unberechtigte Zugriffe geschützt. Um die Ladeklappe zu entriegeln und zu öffnen, muss sich der berechtigte Benutzer zunächst autorisieren, beispielsweise mittels einer Chipkarte oder einer Geheimzahl.

Es gibt verschiedene genormte Ladesteckverbindungen, die jeweils eine ortsfeste Steckdose und eine Steckkupplung für das freie Ende des Ladekabels umfassen. Die nach VDE-AR-E 2623-2-2 genormte Ladesteckverbindung (sogenannte Mennekes-Ladesteckvorrichtung) besitzt eine elektronische Erkennung, ob der Stecker korrekt in die Steckdose eingesteckt ist, und kann somit beide Komponenten selbsttätig miteinander verriegeln. Diese Verriegelung ist aber so schwach dimensioniert, dass ein unbefugtes Abstecken bis hin zur Zerstörung möglich ist, so dass auch diese Ladesteckverbindung hinter einer stabilen Ladeklappe geschützt angeordnet werden muss, wenn sie im Zusammenhang mit öffentlich zugänglichen Ladestationen eingesetzt wird.

Die Betätigung solcher Ladeklappen stößt in der Praxis auf erhebliche Bedienprobleme. Der Grund hierfür ist vor allem, dass die zugelassenen Steckdosen aus Sicherheitsgründen und zum Schutz gegen Umwelteinflüsse mit einer eigenen Schutzkappe oder -klappe versehen sind, die abgenommen bzw. angehoben werden muss, bevor das Ladekabel eingesteckt werden kann. Der Bediener braucht also eine erste Hand, um die Klappe, je nach Bauart, entweder nach oben oder zur Seite hin zu bewegen und damit den Zugriff auf die Steckdose zu erlangen. Da die Ladeklappe nach Herstellung der elektrischen Verbindung wieder zu gehen soll, und zwar ohne Zutun des Benutzers, ist diese zumeist feder- oder gewichtsbelastet, so dass die erste Hand des Benutzers diese offen halten müsste. Die zweite Hand wird zeitgleich dazu benötigt, um die obligatorische Schutzkappe von der Steckdose anzuheben oder abzunehmen. Für den eigentlichen Steckvorgang, nämlich die Einführung des Steckers in die Steckdose, würde nun eine "dritte" Hand benötigt.

Aufgabe der Erfindung ist somit die Konzeption einer Ladestation mit beweglicher Ladeklappe, die eine bequeme und sichere Bedienung mit "nur" zwei Händen ermöglicht und trotzdem ausreichend Schutz gegen Missbrauch, Vandalismus und Fehlbedienung bietet.

Bei der Lösung dieses technischen Problems wird ausgegangen von einer Ladestation mit den Merkmalen des Oberbegriffs des ersten Patentanspruchs. Gelöst wird die Aufgabe gemäß dem kennzeichnenden Teil des Patentanspruchs 1 durch, eine Arretierung, welche die Ladeklappe in geöffneter Stellung selbsttätig fixiert, durch eine Detektoreinrichtung, die das Anstecken und das Abziehen des Ladekabels erkennt, und durch eine Vorrichtung zum automatischen Lösen der Arretierung und Schließen der Ladeklappe nach dem Erkennen, dass das Ladekabel angesteckt oder abgezogen wurde.

Die selbsttätige Arretierung der Ladeklappe, sobald diese geöffnet wurde, erlaubt es dem Benutzer, mit der einen Hand die Schutzkappe von der hinter der Ladeklappe liegenden Steckdose abzunehmen und gleichzeitig mit der anderen Hand das Ladekabel zu greifen, festzuhalten und schließlich einzustecken. Alles Weitere erfolgt nun automatisch: Sobald die erfindungsgemäß vorgesehene Detektoreinrichtung erkannt hat, dass das Ladekabel korrekt angeschlossen ist, wird die Arretierung der Ladeklappe gelöst und die Ladeklappe schließt selbsttätig. Dasselbe geschieht, wenn der Benutzer später zurückkommt und den Ladevorgang beendet. Sobald das Abziehen des Ladekabels erkannt wurde, schließt die Ladeklappe automatisch. Damit wird nicht nur die Bedienung sehr einfach, sicher und bequem, sondern wird die Ladestation auch in optimaler Weise gegen unberechtigte Benutzung, Missbrauch oder Vandalismus geschützt.

Erfindungsgemäß soll die Ladeklappe in geschlossener Stellung den Ladeschacht so abdecken, dass das Ladekabel weder angeschlossen noch abgezogen werden kann, die dahinter liegenden Steckdosen also unzugänglich sind. Hierzu ist es zweckmäßig, den Ladeschacht etwas länger als die Ladeklappe auszubilden, so dass bei geschlossener Ladeklappe ein Spalt verbleibt, durch den das Ladekabel hindurchführt, wenn es an die von der Ladeklappe abgedeckte Steckdose angeschlossen ist. Der Spalt muss nur etwas breiter sein als die Dicke des Ladekabels; die Steckkupplung am freien Ende des Ladekabels darf natürlich nicht durch den Spalt hindurchpassen.

Bevorzugt ist eine Zeitsteuerung vorgesehen, die das Lösen der Arretierung und Schließen der Ladeklappe nicht sofort nach dem Anstecken oder Abziehen des Ladekabels auslöst, sondern erst nach Ablauf eines vorbestimmten, gegebenenfalls einstellbaren Zeitintervalls. Stattdessen oder zusätzlich kann auch eine Bewegungssteuerung vorgesehen werden. In jedem Fall ist die Steuerung so einzustellen, dass die Ladeklappe so schnell wie möglich wieder in die geschlossene Stellung bewegt wird, ohne dass der Benutzer behindert wird oder gar die Gefahr von Verletzungen besteht.

Bei einer bevorzugten Ausführung ist die selbsttätige Arretierung der Ladeklappe durch einen Elektromagneten realisiert, welcher die Ladeklappe in geöffneter Stellung festhält. Das automatische Lösen der Arretierung kann dann einfach dadurch erfolgen, dass der Elektromagnet stromlos geschaltet und die Ladeklappe damit wieder freigegeben wird. Alternativ sind aber auch mechanische Riegel, Sperren oder Rasteinrichtungen denkbar, welche die Ladeklappe in geöffneter Stellung vorübergehend fixieren.

Die Schließkraft für das Schließen der Klappe nach dem automatischen Lösen der Arretierung kann im einfachsten Fall durch die Schwerkraft, vorzugsweise aber durch die Kraft einer Feder aufgebracht werden, welche beim Öffnen der Ladeklappe gespannt wurde. Ein solcher Federantrieb bietet sich insbesondere dann an, wenn die Ladeklappe wie eine Tür um eine vertikale Drehachse schwenkbar ist. In diesem Fall ist die Feder zweckmäßig eine Schraubenfeder, deren Federachse parallel zur Drehachse der Ladeklappe verläuft.

In einer weiteren bevorzugten Ausführung weist die Ladeklappe einen Schwenkbügel auf, der in geöffneter Stellung von dem Elektromagneten festgehalten wird. Ein solcher Schwenkbügel ermöglicht es, den die Arretierung bewirkenden Elektromagneten an geschützter Stelle, insbesondere außerhalb des Ladeschachts anzuordnen, so dass er weder Witterungseinflüssen ausgesetzt noch für den Bediener zugänglich ist.

Anstelle eines Federantriebs kann die Ladeklappe alternativ auch von einem Elektromotor mit selbsthemmenden Getriebe auf und zu bewegt werden. Ein solcher Antrieb bewerkstelligt auch gleich die gewünschte Arretierung der Ladeklappe in geöffneter Stelle, so dass es hierzu keiner weiteren Elemente bedarf.

Ein Ausführungsbeispiel der Erfindung wird nachstehend anhand der beigefügten Abbildungen näher beschrieben: Es zeigen:
- Figur 1: eine Ladestation für das gleichzeitige Laden von zwei Elektrofahrzeugen, in vereinfachter perspektivischer Ansicht;
- Figur 2a: einen Ladeschacht der Ladestation von Fig. 1 bei geschlossener Ladeklappe, in vergrößertem Maßstab;
- Figur 2b: den Ladeschacht gemäß Fig. 2a mit geöffneter Ladeklappe;
- Figur 2c: den Ladeschacht bei geöffneter Ladeklappe und mit angeschlossenem Ladekabel;
- Figur 2d: den Ladeschacht mit angeschlossenem Ladekabel und geschlossener Ladeklappe.

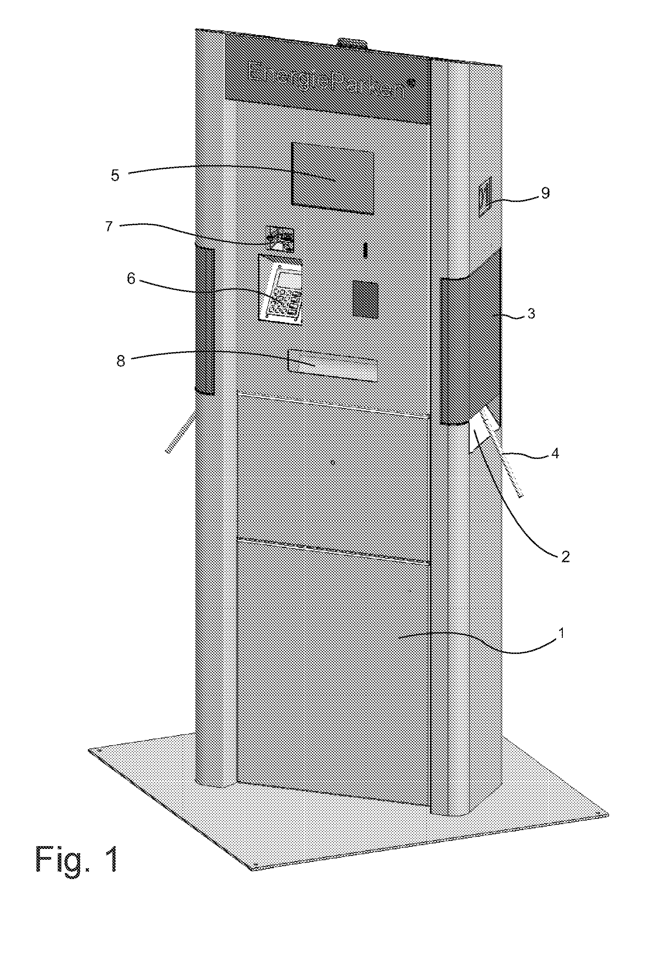

In Fig. 1 ist eine Ladestation zu sehen, mit der die Batterien von zwei Elektrofahrzeugen gleichzeitig aufgeladen werden können. Die Ladestation dient gleichzeitig als Parkscheinautomat.

Die Ladestation hat ein schlankes rechteckiges Gehäuse 1, dessen Form einer Tanksäule ähnelt. An den beiden gegenüber liegenden Schmalseiten ist jeweils ein Ladeschacht 2 vorgesehen, der durch eine bewegliche Ladeklappe 3 so abgedeckt ist, dass ein Ladekabel 4 zwar herausgeführt ist, aber weder angeschlossen noch abgezogen werden kann, wenn die Ladeklappe 3 geschlossen ist.

Der obere Teil der Frontseite des Gehäuses 1 enthält ein Bedien-Terminal, das einen Bildschirm 5, eine Tastatur 6, einen Chipkartenleser 7 und ein Ausgabefach 8 für Quittungen umfasst. Eine LED-Anzeige 9 oberhalb der Ladeklappe 3 zeigt ferner die Nummer des Parkplatzes für das Elektroauto und damit auch der Ladestelle an.

Die Stromversorgung der Ladestation erfolgt mittels eines im Erdboden verlegten Starkstromkabels. Das Gehäuse 1 besteht aus Edelstahl. Die Ladeklappe 3 besteht aus armiertem Kunststoff. Bildschirm 5 und LED-Anzeige 9 sind durch Sicherheitsglas abgedeckt. Damit ist die Ladestation bestens gegen Einbruchsversuche und Vandalismus geschützt. Die Steuerung der Bedienung und des Ladevorgangs erfolgt durch einen Industriecomputer, der im Innern des Gehäuses 1 gut geschützt untergebracht ist.

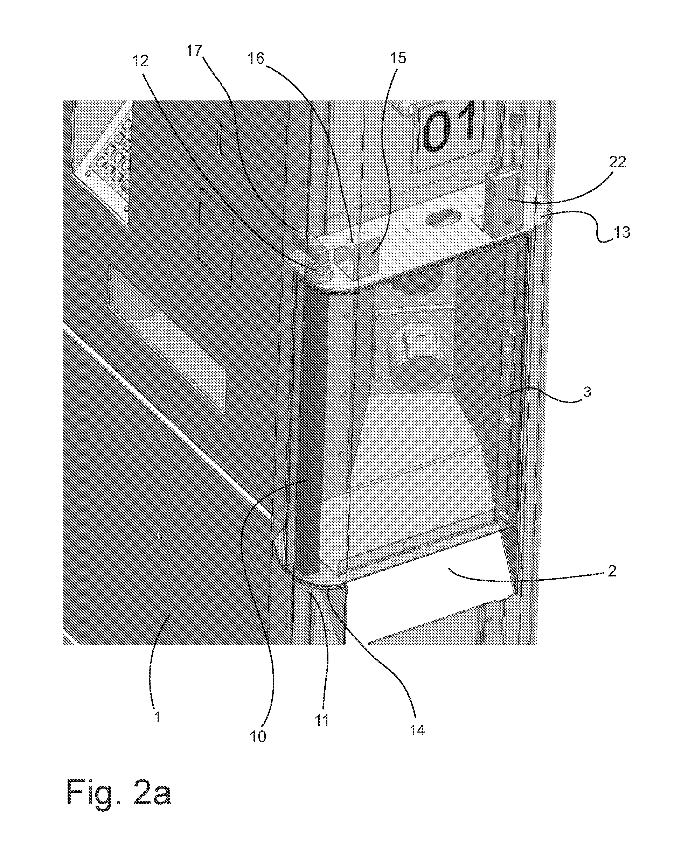

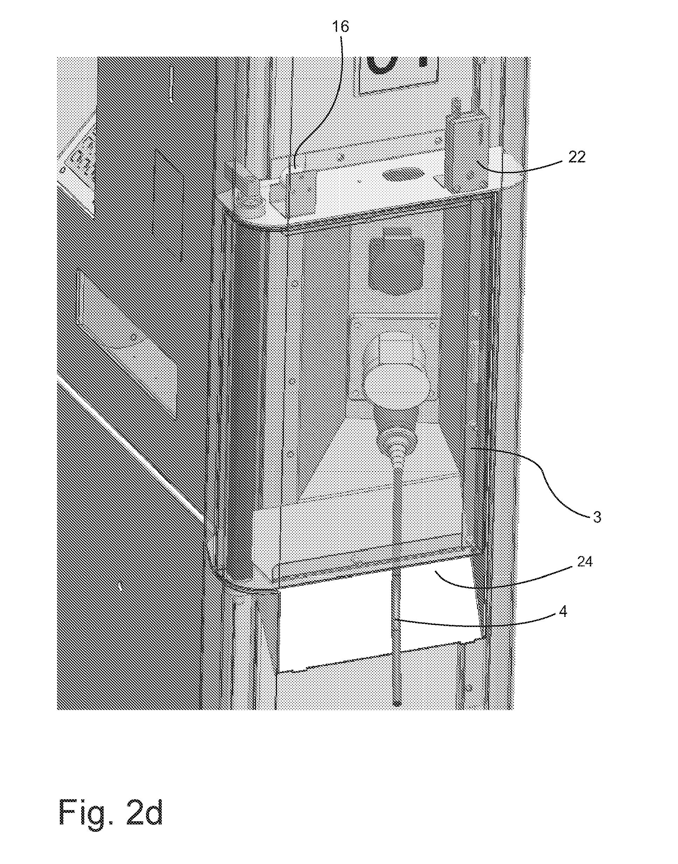

Die Figuren 2a bis 2d zeigen den Bereich um die Ladeklappe 3 in vergrößertem Maßstab, wobei die Ladeklappe 3 durchsichtig dargestellt ist und die sich oben und unten anschließenden Abdeckungen weggelassen sind.

Die Ladeklappe 3 ist im Querschnitt L-förmig ausgebildet. Mit dem kurzen L-Schenkel 10 ist die Ladeklappe 3 an einer Längskante des Gehäuses 1 schwenkbar um eine vertikale Drehachse 11 angelenkt. Die Ladeklappe 3 ist mit einer Schraubenfeder 12 gekoppelt, deren Federachse parallel zur Drehachse 11 verläuft. Die Lagerung der Ladeklappe 3 erfolgt oben in einer horizontalen Deckplatte 13 und unten in einem Lagerwinkel 14. Die Deckplatte 13 trägt an ihrer Oberseite einen Montagewinkel 15, auf dem ein runder Elektromagnet 16 montiert ist. Daneben ist ein Schwenkbügel 17 aus magnetisierbarem Metall zu sehen, der mit der Ladeklappe 3 verbunden ist.

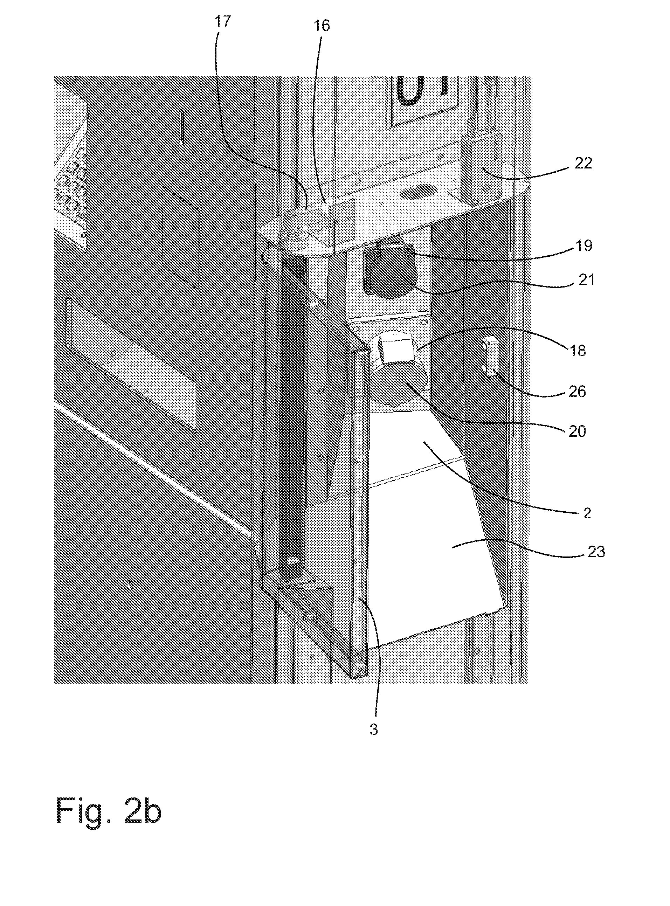

Durch Verschwenken der Ladeklappe 3 um die Drehachse 11 wird der Ladeschacht 2 geöffnet. Dabei spannt sich die Schraubenfeder 12. Wie in Figur 2b zu sehen, werden nun eine erste Steckdose 18 und eine darüber angeordnete zweite, etwas kleinere Steckdose 19 zugänglich. Die beiden Steckdosen 18 und 19 sind jeweils durch federbelastete Schutzdeckel 20 bzw. 21 aus Kunststoff gegen Feuchtigkeit, Verschmutzung und unabsichtliches Berühren gesichert.

An der Oberseite der Deckplatte 13 ist ferner ein Sperrriegel 22 vorgesehen, der elektrisch betätigt wird und die Ladeklappe 3 in geschlossener Stellung (vgl. Fig. 2a) verriegelt.

Der Ladeschacht 2 ist länger als die Ladeklappe 3. Unten geht der Ladeschacht 2 in ein Führungsblech 23 über, das schräg verläuft, so dass der Ladeschacht 2 im Bereich des unteren Endes so weit verengt wird, dass im Bereich der unteren Kante der Ladeklappe 3 nur ein verhältnismäßig enger Spalt 24 verbleibt, wenn die Ladeklappe 3 zu ist (vgl. Fig. 2a).

Das Aufladen eines Elektrofahrzeugs an der Ladestation läuft wie folgt ab:

Nach Abstellen des Fahrzeugs neben einer freien Ladestation autorisiert sich der Benutzer mittels Chipkarte oder Eingabe eines Identifizierungscodes. Gegebenenfalls kann er mittels der Tastatur 6 auch die gewünschte Ladezeit und/oder Parkzeit vorgeben. Die Ladeklappe 3 bleibt solange geschlossen und verriegelt (Fig. 2a).

Sind alle Daten korrekt eingegeben, wird der betreffende Ladeschacht 2 freigegeben, in dem der Sperrriegel 22 nach oben fährt. Nun lässt sich die Ladeklappe 3 mit der Hand öffnen, indem sie um die Drehachse 11 verschwenkt wird, in den Abbildungen nach links. Der Schwenkbügel 17 dreht dabei aus seiner Ausgangsstellung gemäß Fig. 2a soweit in dieselbe Richtung, bis er auf den Elektromagneten 16 trifft und die Schwenkbewegung damit begrenzt.

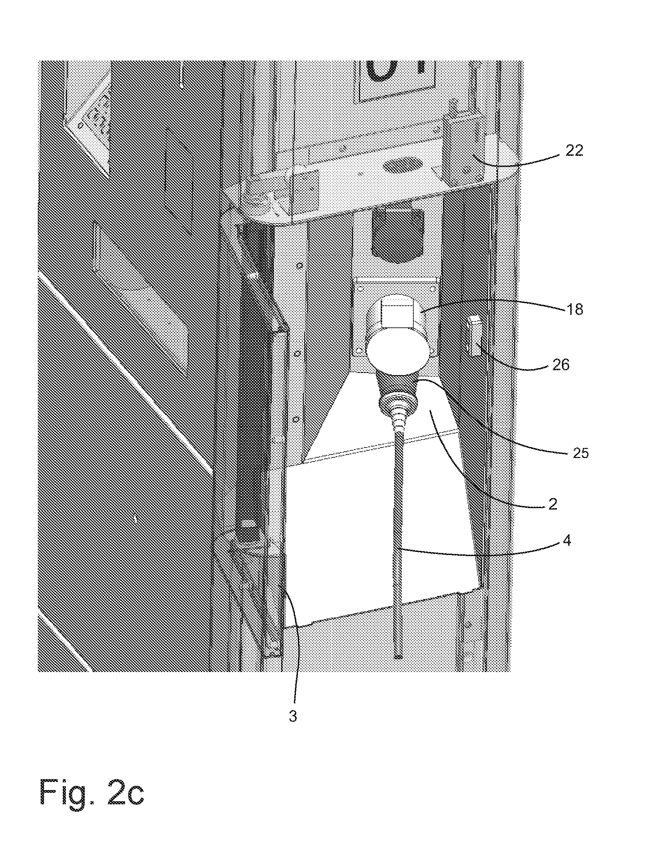

Die in Fig. 2c vollständig geöffnete Ladeklappe 3 steht ungefähr rechtwinklig von der Stirnseite des Gehäuses 1 ab. Da der Schwenkbügel 17 an dem eingeschalteten Elektromagneten 16 haftet, ist die Ladeklappe 3 in der geöffneten Stellung selbsttätig fixiert, so dass der Benutzer jetzt wieder beide Hände frei hat.

Im nächsten Schritt hebt der Benutzer den Schutzdeckel 20 der Steckdose 18 mit der einen Hand ab und kann gleichzeitig mit der anderen Hand den Stecker 25 des Ladekabels 4 ergreifen und in die Steckdose 18 einstecken, um die elektrische Verbindung zwischen Fahrzeug und Ladestation herzustellen (vgl. Fig. 2c).

Je nach Typ der vorhandenen Steckdose 18 bzw. 19 wird die elektrische und mechanische Koppelung durch Steuersignale und/oder einen optischen Detektor erkannt. Nach Ablauf einer vorgegebenen, vom Benutzer nicht zu beeinflussenden Wartezeit wird der Strom durch den Elektromagneten 16 abgeschaltet, wodurch der Schwenkbügel 17 abfällt. Die beim Öffnen der Ladeklappe 3 gespannte Schraubenfeder 12 lässt die Ladeklappe 3 nun automatisch zufahren, bis sie an einem Anschlag 26 anliegt.

Solange das Fahrzeug geladen wird, bleibt die Ladeklappe 3 geschlossen und mittels des Sperrriegels 22 auch verriegelt. Das Ladekabel 4 ist dabei durch den Spalt 24 zwischen Ladeklappe 3 und Führungsblech 23 hindurch geführt. Der Spalt 24 ist so bemessen, dass der Stecker 25 des Ladekabels 4 nicht hindurch passt, selbst wenn er aus der Steckdose 18 herausgezogen würde. Allerdings kann das Ladekabel 4 gar nicht durch Ziehen am Kabel aus der Steckdose 18 herausgezogen werden, da es nach unten abgebogen ist und deshalb Zugkräfte, die parallel zur Achse von Stecker 25 und Steckdose 18 wirken, praktisch nicht auftreten können.

Kehrt der Benutzer nach Ablauf der vorgegebenen Ladezeit bzw. Parkzeit zu seinem Fahrzeug zurück, muss er sich erneut identifizieren bzw. autorisieren, bevor der Sperrriegel 22 die Ladeklappe 3 frei gibt und der Benutzer diese von Hand öffnen kann. Sobald die Ladeklappe 3 die geöffnete Stellung (vgl. Fig. 2b) erreicht hat, wird sie wieder selbsttätig arretiert. Dies erleichtert dem Benutzer das Abziehen des Ladekabels 4 von der Steckdose 18, auch wenn er dazu nicht unbedingt zwei Hände benötigt.

An das Schließen der Ladeklappe 3 muss der Benutzer nicht denken, denn auch das erfolgte Abziehen des Ladekabels 4 wird von der Steuerelektronik der Ladestation erkannt, mit der Folge, dass der Elektromagnet 16 erneut stromlos geschaltet wird und dadurch die Ladeklappe 3 nach kurzer Zeit automatisch zu fährt. Zum Schluss wird der Sperrriegel 22 wieder aktiviert.

Im Falle eines Stromausfalls würde auch der Elektromagnet 16 stromlos werden, so dass in jedem Fall ein Offenstehen der Ladeklappe 3 verhindert wird. Auch der Sperrriegel 22 funktioniert nur, solange die Ladestation mit Strom versorgt ist. Im Falle eines Stromausfalls würde der Sperrriegel 22 inaktiv, so dass sich die Ladeklappe 3 notfalls von Hand öffnen ließe, um ein gestecktes Ladekabel 4 abzuziehen.

### Bezugszeichen

- 1: Gehäuse
- 2: Ladeschacht
- 3: Ladeklappe
- 4: Ladekabel
- 5: Bildschirm
- 6: Tastatur
- 7: Chipkartenleser
- 8: Ausgabefach
- 9: LED-Anzeige
- 10: L-Schenkel (von 3)
- 11: Drehachse
- 12: Schraubenfeder
- 13: Deckplatte
- 14: Lagerwinkel
- 15: Montagewinkel
- 16: Elektromagnet
- 17: Schwenkbügel
- 18: Erste Steckdose
- 19: Zweite Steckdose
- 20: Schutzdeckel (von 18)
- 21: Schutzdeckel (von 19)
- 22: Sperrriegel
- 23: Führungsblech
- 24: Spalt
- 25: Stecker (von 4)
- 26: Anschlag

## Patentansprüche

1. Ladestation zum Aufladen von Elektrofahrzeugen, mit
einem Ladeschacht, in dem mindestens eine Steckdose zum Anschließen eines Ladekabels angeordnet ist;
einer beweglichen Ladeklappe, die bei geöffneter Stellung das Anstecken oder Abziehen des Ladekabels erlaubt und bei geschlossener Stellung den Ladeschacht so abdeckt, dass das Ladekabel nicht angesteckt oder abgezogen werden kann;
einer Vorrichtung zum Verriegeln der geschlossenen Ladeklappe;
**gekennzeichnet durch**
eine Arretierung, welche die Ladeklappe (3) in geöffneter Stellung selbsttätig fixiert;
eine Detektoreinrichtung, die das Anstecken und das Abziehen des Ladekabels (4) erkennt;
eine Vorrichtung zum automatischen Lösen der Arretierung und Schließen der Ladeklappe (3) nach dem Anstecken oder Abziehen des Ladekabels (4).

2. Ladestation nach Anspruch 1, **dadurch gekennzeichnet, dass** bei geschlossener Ladeklappe (3) ein Spalt (24) zur Durchführung des Ladekabels (4) verbleibt.

3. Ladestation nach Anspruch 1 oder 2, **gekennzeichnet durch** eine Zeitsteuerung, die das Lösen der Arretierung und Schließen der Ladeklappe (3) nach Ablauf einer vorbestimmten Zeitdauer nach dem Anstecken oder Abziehen des Ladekabels (4) bewirkt.

4. Ladestation nach einem der Ansprüche 1 bis 3, **gekennzeichnet durch** einen Elektromagneten (16), der die Ladeklappe (3) in geöffneter Stellung festhält.

5. Ladestation nach einem der Ansprüche 1 bis 4, **dadurch gekennzeichnet, dass** die Ladeklappe (3) unter der Wirkung einer Feder steht, deren Kraft das Schließen der Ladeklappe (3) bewirkt.

6. Ladestation nach einem der Ansprüche 1 bis 5, **dadurch gekennzeichnet, dass** die Ladeklappe (3) um eine vertikale Drehachse (11) schwenkbar ist.

7. Ladestation nach Anspruch 5 und 6, **dadurch gekennzeichnet, dass** die Feder eine Schraubenfeder (12) ist, deren Federachse parallel zur Drehachse (11) der Ladeklappe (3) verläuft.

8. Ladestation nach Anspruch 4, **dadurch gekennzeichnet, dass** die Ladeklappe (3) einen Schwenkbügel (17) aufweist, der in geöffneter Stellung auf den Elektromagneten (16) trifft und von diesem magnetisch festgehalten wird.

9. Ladestation nach einem der Ansprüche 1 bis 3, **dadurch gekennzeichnet, dass** die Ladeklappe (3) von einem Elektromotor mit selbsthemmenden Getriebe angetrieben ist.

## Geänderte Patentansprüche

### Geänderte Patentansprüche gemäss Regel 137(2) EPÜ.

**1.** Ladestation zum Aufladen von Elektrofahrzeugen, mit
einem Ladeschacht, in dem mindestens eine Steckdose zum Anschließen eines Ladekabels mit Stecker angeordnet ist;
einer beweglichen Ladeklappe, die bei geöffneter Stellung das Anstecken oder Abziehen des Ladekabels erlaubt und bei geschlossener Stellung den Ladeschacht abdeckt,
einer Vorrichtung zum Verriegeln der geschlossenen Ladeklappe;
**dadurch gekennzeichnet, dass**
bei geschlossener Ladeklappe (3) ein Spalt (24) zur Durchführung des Ladekabels (4) verbleibt;
eine Arretierung, welche die Ladeklappe (3) in geöffneter Stellung selbsttätig fixiert;
eine Detektoreinrichtung, die das Anstecken und das Abziehen des Ladekabels (4) erkennt;
eine Vorrichtung zum automatischen Lösen der Arretierung und Schließen der Ladeklappe (3) nach dem Anstecken oder Abziehen des Ladekabels (4).

**2.** Ladestation nach Anspruch 1, **dadurch gekennzeichnet, dass** der Spalt (24) zur Durchführung des Ladekabels (4) nur etwas breiter ist als die Dicke des Ladekabels (4).
